# EUROPÄISCHE PATENTSCHRIFT

(11) **EP 4 396 059 B1**
(45) Veröffentlichungstag und Bekanntmachung des Hinweises auf die Patenterteilung: **23.04.2025**
(21) Anmeldenummer: 22769295.1
(22) Anmeldetag: 29.08.2022
(51) Int. Cl.: B61D 17/18

(54) **BRANDGESCHÜTZTE BODENSTRUKTUR EINES WAGENKASTENS IN LEICHTBAUWEISE**
FIREPROOF FLOOR STRUCTURE OF A CAR BODY IN LIGHTWEIGHT DESIGN
STRUCTURE DE PLANCHER IGNIFUGE D'UNE CAISSE LÉGÈRE

(30) Priorität: 31.08.2021 EP 21194142
(43) Veröffentlichungstag der Anmeldung: 10.07.2024
(73) Patentinhaber: 3A Composites Mobility AG, 9423 Altenrhein (CH)
(72) Erfinder: HARTWIG, Markus, 9008 St. Gallen (CH); MICHOS, Panagiotis, 8590 Romanshorn (CH)
(74) Vertreter: Gernet Althaus IP AG
(86) Internationale Anmeldenummer: PCT/EP2022/073976
(87) Internationale Veröffentlichungsnummer: WO 2023/031133

(56) Entgegenhaltungen:
- EP-A1- 0 314 625
- EP-A1- 2 942 193
- WO-A1-2008/135190
- US-A- 6 114 003

## Beschreibung

Die Erfindung betrifft eine brandgeschützte Bodenstruktur eines Wagenkastens für Schienen- oder Strassentransportfahrzeuge in Leichtbauweise.

Für Bodenstrukturen von Schienen- oder Strassentransportfahrzeugen wird oft die Norm ASTM E119 angefordert, d.h. im Brandfall mit Temperaturen bis 840-860 °C darf die Oberflächentemperatur an der Deckschicht der Bodenstruktur während 30 Minuten im Mittel die Temperatur von 140 °C nicht übersteigen und eine mit 400 kg/m² belastete Bodenstruktur darf während 30 Minuten nicht kollabieren.

Feuerfeste Untergestell-Bodenstrukturen für Schienenfahrzeuge sind aus dem Stand der Technik an sich bekannt. So beschreibt CN110641491A ein Verfahren zur Herstellung einer Untergestell-Brandschutzbodenstruktur für Schienenfahrzeuge umfassend einen Boden-Lastaufnahmerahmen und einen auf dem Boden-Lastaufnahmerahmen verlegten Boden, wobei der Boden-Lastaufnahmerahmen unter Verwendung von Kohlenstoffstahl integral geschweißt ist und einen rechteckigen Außenrahmen und eine Vielzahl von Querträgern aufweist. Dabei sind hutförmige Brandschutzplatten mit nach unten gerichteten Oberseiten zwischen jeweils zwei benachbarten Querträgern angeordnet und die Seitenwände der hutförmigen Brandschutzplatten sind zwischen den beiden benachbarten Querträgern eingespannt. Die beiden Ränder der hutförmigen feuerfesten Platten sind entsprechend und integral mit den oberen Oberflächen der beiden benachbarten Querträger verbunden. Der Boden ist mit jedem Querträger durch Verwendung eines Klebers verbunden und kältefeste und wärmeisolierende, aus Keramikfasern bestehende Materialien sind zwischen dem Boden und den hutförmigen feuerfesten Platten angeordnet.

CN210454809A beschreibt eine Bodenstruktur für ein Schienenfahrzeug, wobei die Bodenstruktur eine Schicht aus rostfreiem Stahlblech umfasst und eine Wärmeisolationsschicht auf der rostfreien Stahlschicht angeordnet ist. Ein Aluminiumprofil-Bodenrahmen ist auf der Wärmeisolationsschicht angeordnet.

US2018/0215398A1 beschreibt einen Bodenaufbau, der mit einem Untergestell versehen ist, das Teil eines Wagenkastens ist. Das Untergestell erstreckt sich entlang einer Längsachse, die mit der Vorschubachse eines solchen Wagens zusammenfällt, und eine Vielzahl von Längsbefestigungsschienen aufweist, die auf einem Bereich der unteren Oberfläche des Untergestells angeordnet sind. Die Befestigungsschienen ragen nach unten, um dazwischen eine Vielzahl von Fächern zu begrenzen, in die Platten mit Isoliermaterial eingesetzt sind, um ein Brandschutzsystem zu bilden.

EP0806539A1 beschreibt einen Verbundlaminatboden für Eisenbahnwaggons mit inneren Hohlräumen, von denen mindestens einer mit einem intumeszierenden Material gefüllt ist. Bei Brandeinwirkung verzögert oder verhindert ein solcher Gegenstand den Durchbruch des Feuers in ein angrenzendes Abteil oder einen angrenzenden Raum für eine ausreichende Zeit, um den Insassen zu ermöglichen, das angrenzende Abteil zu evakuieren oder das Feuer zu löschen. Das intumeszierende Material entspricht den Anforderungen der ASTM E152.

US 6,114,003 beschreibt eine flammen- und hitzebeständige Isolierplatte, die zum Schutz von Rümpfen, Schotten, Decken und Abteilen von Schiffen, Flugzeugen, Eisenbahntankwagen und Tankwagen verwendet wird. Die Isolierplatte weist eine inneren Kernluftzelle aus Metall mit einer ersten Seite zum Aufnehmen eines ersten Verbundstoffs und einer zweiten Seite zum Aufnehmen eines zweiten Verbundstoffs auf. Die Verbundstoffe weisen eine innere Schicht, die aus einer Metallfolie gebildet ist, eine mittlere Schicht auf Keramikbasis, und eine äußere Schicht aus einer intumeszierenden, feuerhemmenden Beschichtung auf einem Glasfaserblatt auf.

Das Problem bei der Herstellung von brandgeschützten Bodenstrukturen für Wagenkasten von Schienen- oder Strassenfahrzeugen ist das hohe Gewicht der aus dem Stand der Technik bekannten Bodenstrukturen, welche die Brandschutzanforderungen nach ASTM E119 erfüllen.

Aufgabe vorliegender Erfindung ist die Bereitstellung einer brandgeschützten Bodenstruktur eines Wagenkastens für Schienen- und Strassentransportfahrzeuge in Leichtbauweise, welche die Anforderungen nach dem Prüfprotokoll ASTM E119 erfüllen. Diese Bodenstruktur muss somit eine Barriere gegen das Feuer auf der geschützten Seite der Bodenstruktur, d.h. der Wageninnenseite, aufrechterhalten und eine ausreichende strukturelle Integrität bieten, um die Tragfähigkeit der Bodenstruktur auch im Brandfall aufrecht zu erhalten. Eine weitere Aufgabe der Erfindung betrifft den einfachen Einbau einer Bodenstruktur in den Wagenkasten.

Diese Aufgaben werden durch eine brandgeschützte Bodenstruktur gemäss Anspruch 1 gelöst. Bevorzugte Ausführungsformen der Bodenstruktur sind in den vom unabhängigen Anspruch 1 direkt oder indirekt abhängigen Ansprüchen beschrieben.

Die erfindungsgemässe brandgeschützte Bodenstruktur eines Wagenkastens für Schienen- und Strassenfahrzeuge enthaltend Anschlussprofile weist eine Sandwichplatte aus einer metallischen Deckschicht und einer metallischen Basisschicht und eine dazwischenliegende Schicht aus einer Kernschicht aus nicht feuerfestem Material sowie metallische Randprofile auf. Die Randprofile sind dabei dergestalt ausgebildet, dass die Kernschicht vollständig durch die metallischen Deck- und Basisschichten und die Randprofile eingeschlossen ist. Die Bodenstruktur weist auf der der Kernschicht abgewandten Seite der Basisschicht eine mineralische Kühlmittelschicht und in Bereichen zur Befestigung von Anschlussprofilen intumeszierende Hartschichtplatten auf, wobei ein innerer Bereich auf der der Sandwichplatte abgewandten Seite der Hartschichtplatten jeweils einen intumeszierenden Klebstoffschichtbereich aufweist. Die der Kernschicht abgewandte Seite der Basisschicht ist somit vollflächig durch die mineralische Kühlmittelschicht und die intumeszierenden Hartschichtplatten bedeckt, da sich auf der Basisschicht entweder die intumeszierenden Hartschichtplatten oder die mineralische Kühlmittelschicht befindet, d.h. die mineralische Kühlmittelschicht umgibt die intumeszierenden Hartschichtplatten. Die der Sandwichplatte abgewandte Seite der mineralischen Kühlmittelschicht sowie zumindest ein Randbereich der nicht mit dem intumeszierenden Klebstoff bedeckten Bereiche der Hartschichtplatten sind mit einer intumeszierenden Schicht bedeckt. Die Anschlussprofile sind jeweils in einem inneren Bereich auf der der Sandwichlatte abgewandten Seite der intumeszierenden Klebstoffschicht-Bereiche aufgeklebt.

Das nicht feuerfeste Material der Kernschicht bedeutet insbesondere, dass dieses mit dem Sauerstoff der Luft unter Freisetzung von Strahlungsenergie bzw. Wärme reagieren kann und nach der Entflammung weiterbrennt, auch wenn die Zündquelle entfernt wird.

Kernschichten aus nicht feuerfestem Material gemäss vorliegender Erfindung sind Kernschichten aus Strukturschaum, insbesondere Kernschichten aus PET-Schaum, oder Kernschichten aus Balsaholz, insbesondere aus Balsa-Hirnholzplatten. Dabei bedeutet Strukturschaum einen Schaumstoff mit zellförmiger Struktur. Weiter bevorzugt sind Kernschichten, welche PET oder Balsaholz zumindest zu 95 Gew-% enthalten.

Intumeszierende Materialien schäumen unter Hitzeeinwirkung auf, d.h. sie nehmen unter Hitzeeinwirkung an Volumen zu und entsprechend an Dichte ab. Die Volumenzunahme der intumeszierenden Materialien beträgt zweckmässigerweise bis zum 20-fachen des ursprünglichen Materialvolumens.

Schienenfahrzeuge zur Anwendung vorliegender Bodenstruktur sind insbesondere Eisenbahn-, Metro-, S- und U-Bahnzüge und Trams. Bevorzugte Anwendungen der erfindungsgemässen Bodenstrukturen in Strassenfahrzeugen sind insbesondere Wagenkasten von Omnibussen und anderen nicht schienengebundenen Fahrzeugen des öffentlichen Verkehrs. Besonders bevorzugte Anwendungen betreffen batteriebetriebene Fahrzeuge (e-Mobility).

Die metallischen Deck- und Basisschichten sowie die Randprofile der Sandwichplatte bestehen bevorzugt aus Aluminium.

Die mineralische Kühlmittelschicht ist - mit Ausnahme der Bereiche, welche intumeszierende Hartschichtplatten aufweisen - bevorzugt vollflächig auf die Basisschicht vorzugsweise mit einem Zweikomponenten Polyurethan- oder Epoxidharz-Klebstoff aufgeklebt.

Die mineralische Kühlmittelschicht besteht bevorzugt aus einer Schicht aus zementgebundenem Calciumsilikat. Die Kühlwirkung beruht dabei auf der endothermen Verdunstung von hydratisierten Mineralien. Die mineralische Kühlmittelschicht ist zweckmässig 1 bis 3 mm dick. Bevorzugt wird das Handelsprodukt ENEX eingesetzt. ENEX besteht aus Metall-Hydraten und ist ein mineralisches Kühlmittel, welches bei Erwärmung über eine Grenztemperatur große Mengen Wärme aufnimmt. Die Wirkung beruht auf der Verdunstung von hydratisierten Mineralien.

Die intumeszierende Schicht ist - mit Ausnahme der mit intumeszierendem Klebstoff bedeckten Bereiche der Hartschichtplatten - bevorzugt vollflächig auf die mineralische Kühlmittelschicht sowie jeweils einem Randbereich der intumeszierenden Hartschichtplatten aufgeklebt. Dabei wird bevorzugt ein Zweikomponenten Polyurethanklebstoff verwendet.

Die intumeszierende Schicht besteht bevorzugt aus einem intumeszierenden Vlies, wobei das Vlies bevorzugt aus Silikatfasern besteht. Die intumeszierende Schicht ist zweckmässig 0.7 bis 3 mm dick. Bevorzugt wird für die intumeszierende Schicht das Handelsprodukt PYRO-SAFE eingesetzt.

Die Bodenstruktur weist in der Draufsicht eine im Wesentlichen rechteckige Struktur mit einer Breite zweckmässigerweise zwischen 1.5 und 4 m, bevorzugt zwischen 2 und 3 m und einer Länge zweckmässigerweise zwischen 6 m und 25 m, bevorzugt zwischen 10 und 20 m auf.

Die Bodenstruktur ist bevorzugt selbsttragend ausgebildet, wobei die Sandwichplatte eine Dicke von zweckmässig 30 bis 80 mm und bevorzugt 50 bis 70 mm aufweist.

Die Deck- und Basisschichten des Sandwiches weisen bevorzugt eine Dicke von 1.0 bis 2.0 mm auf.

Die intumeszierenden Hartschichtplatten bestehen vorzugsweise aus einem auf Graphit basierenden Plattenmaterial. Für die Befestigung eines Anschlussprofils wird jeweils eine intumeszierende Hartschichtplatte benötigt, da das Profil auf der intumeszierenden Schicht nicht sicher aufgeklebt werden kann.

Die intumeszierenden Hartschichtplatten bestehen vorzugsweise aus unter Hochdruck verpresstem, intumeszierendem Vlies, wie beispielsweise vorstehend beschrieben.

Anschlussprofile, bevorzugt C-Schienen, zur Aufnahme von Rohren oder Leitungen befinden sich auf den freiliegenden Oberflächenbereichen der intumeszierenden Hartschichtplatten, wobei diese Anschlussprofile bevorzugt mittels einem intumeszierenden Klebstoff an den intumeszierenden Hartschichtplatten angebracht sind.

Die erfindungsgemässe Bodenstruktur wird bevorzugt über die Randprofile des Sandwiches mit den Wänden des Wagenkastens mittels Befestigungsmittel verbunden. Die Befestigung kann beispielsweise durch Schweissen oder mittels Schrauben, Nieten oder Klebstoff erfolgen.

Die Erfindung wird anhand der folgenden beispielhaften Zeichnungen weiter erläutert.
- Fig. 1: zeigt einen schematischen Querschnitt durch eine erfindungsgemässe Bodenstruktur eines Wagenkastens mit einem Anschlussprofil;
- Fig. 2: zeigt eine perspektivische Ansicht vom Fahrzeugboden her gesehen auf einen Ausschnitt einer erfindungsgemässen Bodenstruktur eines Wagenkastens eines Schienen- oder Strassenfahrzeuges mit einem Anschlussprofil;
- Fig. 3: zeigt eine weitere perspektivische Ansicht vom Fahrzeugboden her gesehen auf einen Ausschnitt einer erfindungsgemässen Bodenstruktur eines Wagenkastens eines Schienen- oder Strassenfahrzeuges mit einem Anschlussprofil;
- Fig. 4: zeigt eine perspektivische Sicht auf die Oberfläche einer erfindungsgemässen Bodenstruktur;
- Fig. 5: zeigt eine perspektivische Sicht auf die Unterseite einer erfindungsgemässen Bodenstruktur mit einer Vielzahl von Anschlussprofilen.

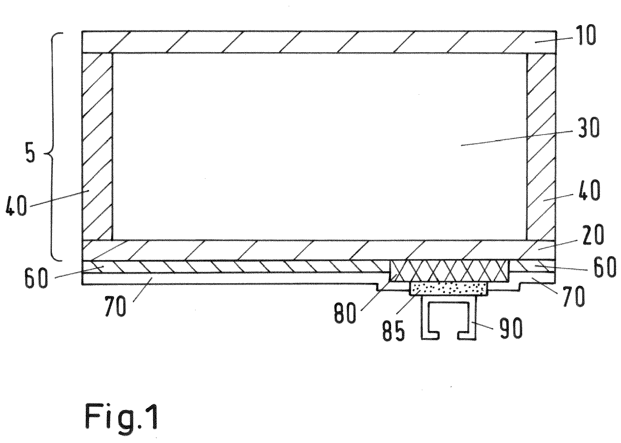

Fig. 1 zeigt einen schematischen Querschnitt durch eine erfindungsgemässe Bodenstruktur eines Wagenkastens mit einem Anschlussprofil. Die Bodenstruktur weist eine Sandwichplatte 5 auf, welche eine metallische Deckschicht 10 und eine metallische Basisschicht 20, eine dazwischenliegende Schicht aus einer Kernschicht 30 aus nicht feuerfestem Material, sowie metallische Randprofile 40 enthält, wobei die Randprofile 40 dergestalt ausgebildet sind, dass die Kernschicht 30 vollständig durch die metallischen Deck- und Basisschichten 10, 20 und die Randprofile 40 eingeschlossen ist. Die Bodenstruktur weist auf der der Kernschicht 30 abgewandten Seite der Basisschicht 20 eine mineralische Kühlmittelschicht 60 oder in einem Bereich zur Befestigung des Anschlussprofils 90 eine intumeszierende Hartschichtplatte 80 auf, so dass die der Kernschicht 30 abgewandte Seite der Basisschicht 20 vollflächig entweder mit der mineralischen Kühlmittelschicht 60 oder mit der intumeszierenden Hartschichtplatte 80 bedeckt ist. Ein innerer Bereich auf der der Sandwichplatte 5 abgewandten Seite der Hartschichtplatte 80 weist eine intumeszierende Klebstoffschicht 85 auf. Dabei versteht sich der Begriff «innerer Bereich» als ein innerer Bereich der Hartschichtplatte in der Draufsicht auf die Hartschichtplatte gesehen. Die der Sandwichlatte 5 abgewandte Seite der mineralischen Kühlmittelschicht 60 sowie der nicht mit dem intumeszierenden Klebstoff 85 bedeckte Bereich der Hartschichtplatte 80 ist mit einer intumeszierenden Schicht 70 bedeckt. Somit bedeckt die intumeszierende Schicht 70 die ganze mineralische Kühlmittelschicht 60 und überlappt den nicht mit der intumeszierenden Klebstoffschicht 85 bedeckte Teil der Hartschichtplatte 80. Das Anschlussprofil 90 ist auf der der Sandwichlatte 5 abgewandten Seite der intumeszierenden Klebstoffschicht 85 aufgeklebt, wobei sich das Anschlussprofil in einem inneren Bereich der intumeszierenden Klebstoffschicht 85 befindet, so dass zwischen dem Anschlussprofil 90 und dem äusseren Rand der intumeszierenden Klebstoffschicht 85 ein Abstand besteht. Der innere Bereich der intumeszierenden Klebstoffschicht meint wiederum den inneren Bereich in der Draufsicht auf die intumeszierende Klebstoffschicht gesehen. Das Anschlussprofil ist eine C-Schiene, wobei sich das «C» auf den Querschnitt der Längsschiene bezieht. In der Draufsicht auf die Unterseite der Bodenstruktur kann die intumeszierende Klebstoffschicht 85 eine beliebige Gestalt aufweisen und insbesondere kreisförmig, oval oder rechteckig sein.

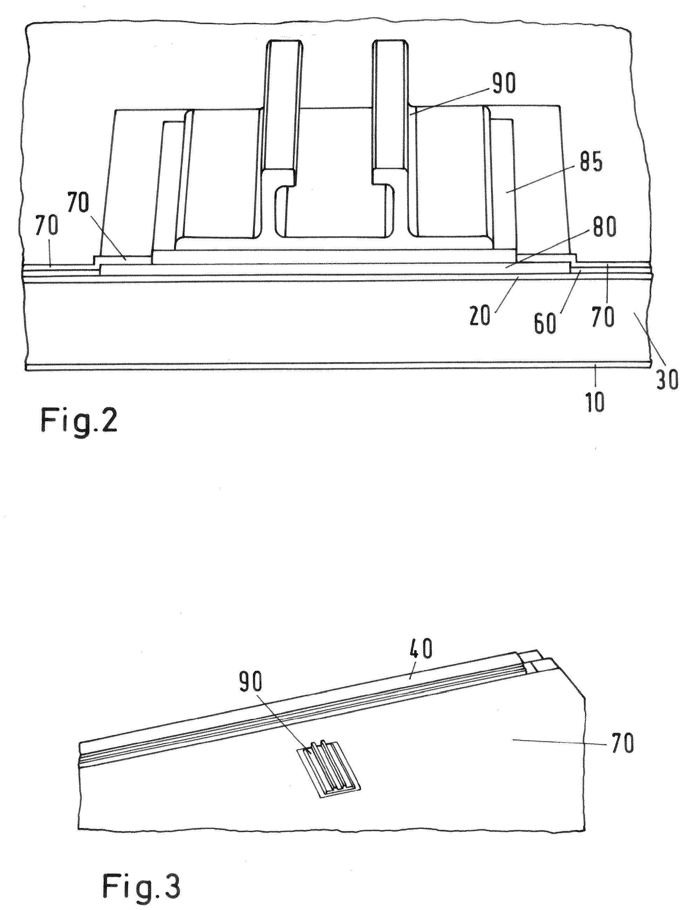

Fig. 2 zeigt eine perspektivische Ansicht vom Fahrzeugboden her gesehen auf einen Ausschnitt einer erfindungsgemässen Bodenstruktur eines Wagenkastens eines Schienen- oder Strassenfahrzeuges mit einem Anschlussprofil. Wenn die erfindungsgemässe Bodenstruktur an einem Wagenkasten befestigt ist, sind die Befestigungselemente - wie hier eine einzelne C-Schiene - gegen den Boden des Fahrzeuges, bzw. gegen die Räder gerichtet.

Fig. 2 zeigt im unteren Teil die Sandwichstruktur 5 mit den Deck- und Basisschichten 10, 20, welche eine Kernschicht 30 aus nicht feuerfestem Material einschliessen. Auf der der Kernschicht 30 abgewandten Seite der Basisschicht 20 ist eine mineralische Kühlmittelschicht 60 und in einem Bereich zur Befestigung des Anschlussprofils 90 eine intumeszierende Hartschichtplatte 80 zu sehen. Ein innerer Bereich auf der der Kernschicht 30 abgewandten Seite der Hartschichtplatte 80 weist eine intumeszierende Klebstoffschicht 85 auf. Die der Kernschicht 30 abgewandte Seite der mineralischen Kühlmittelschicht 60 sowie der nicht mit dem intumeszierenden Klebstoff 85 bedeckte Bereich der Hartschichtplatte 80 ist mit einer intumeszierenden Schicht 70 bedeckt. Somit bedeckt die intumeszierende Schicht 70 die ganze mineralische Kühlmittelschicht 60 und überlappt zumindest einen Randbereich des nicht mit dem intumeszierenden Klebstoffschichtbereich 85 bedeckten Teils der Hartschichtplatte 80. Die C-Schiene 90 ist auf der der Kernschicht 30 abgewandten Seite der intumeszierenden Klebstoffschicht 85 aufgeklebt. Die intumeszierende Hartschichtplatte 80 weist eine rechteckige Gestalt auf und ihr Randbereich ist in Fig. 2 durch die rechteckige Linie auf der Oberfläche der intumeszierenden Schicht 70 angedeutet. Die intumeszierende Klebstoffschicht 85 hat ebenfalls eine rechteckförmige Flächengestalt, wobei sich deren Ausdehnung innerhalb der intumeszierenden Hartschichtplatte 80 befindet.

Fig. 3 zeigt eine weitere perspektivische Ansicht vom Fahrzeugboden her gesehen auf einen Ausschnitt einer erfindungsgemässen Bodenstruktur eines Wagenkastens eines Schienen- oder Strassenfahrzeuges mit einem Anschlussprofil. Fig. 3 zeigt die Bodenstruktur mit Randprofil 40 und der Aussenfläche der intumeszierenden Schicht 70. Eine C-Schiene 90 steht gegenüber der intumeszierenden Schicht 70 vor.

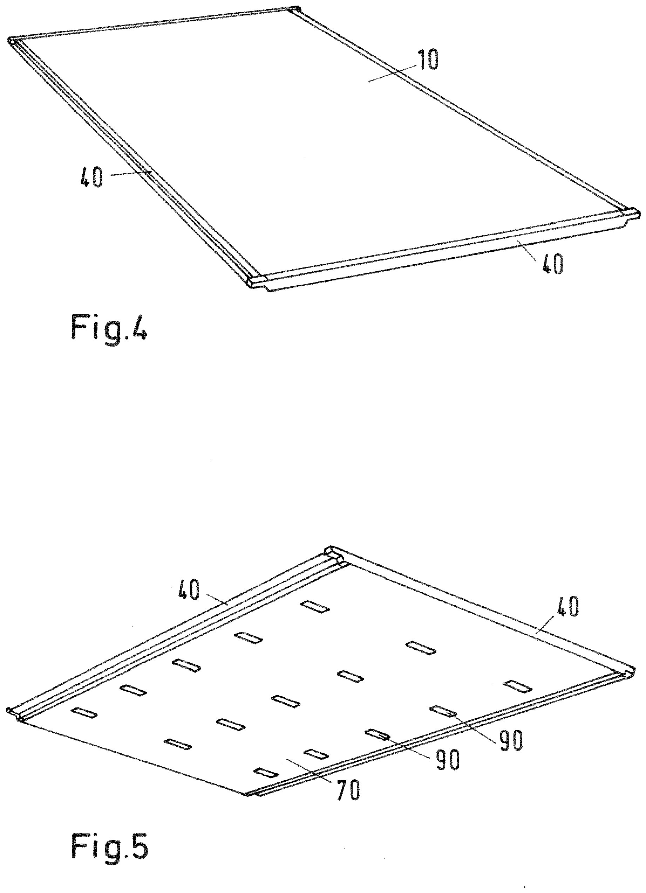

Fig. 4 zeigt eine perspektivische Sicht auf die Oberfläche einer erfindungsgemässen Bodenstruktur, wobei die Oberfläche durch die metallische Deckschicht 10 gebildet wird. Fig. 4 zeigt weiter das umlaufende Randprofil 40 der Sandwichplatte 5.

Fig. 5 zeigt eine perspektivische Sicht auf die Unterseite einer erfindungsgemässen Bodenstruktur mit einer Vielzahl darauf angebrachter Anschlussprofile, wobei die untere Oberfläche durch die intumeszierende Schicht 70 und eine Vielzahl von gegenüber der Oberfläche der intumeszierenden Schicht 70 vorstehenden C-Schienen gebildet wird. Fig. 5 zeigt weiter das umlaufende Randprofil 40 der Sandwichplatte 5.

Im Folgenden werden zwei durchgeführte Brandschutztests gemäss ISO 834-1 in Anlehnung an ASTM E 119 kurz erläutert.

### Test 1 :

Eine quadratisch ausgebildete Bodenplatte mit einer Oberfläche von 0.35 m² wurde mit einem Gewicht von 1470 Newton belastet. Die Bodenplatte bestand aus einer Aluminium-Deckschicht und einer Basisschicht aus Aluminium einer Dicke von je 1 mm und einer dazwischenliegenden Kernschicht aus PET-Schaum sowie metallischen Randprofile aus Aluminium. Die Randprofile waren dergestalt ausgebildet, dass die Kernschicht vollständig durch die metallischen Deck- und Basisschichten und die Randprofile eingeschlossen war. Die Bodenplatte wies auf der der Kernschicht abgewandten Seite der Basisschicht eine 2 mm dicke mineralische Kühlmittelschicht aus ENEX und in einem Bereich zur Befestigung einer C-förmigen Anschlussschiene eine intumeszierende Hartschichtplatte aus unter Hochdruck verpresstem, intumeszierendem Vlies aus PYRO-SAVE auf. Ein innerer Bereich auf der der Kernschicht abgewandten Seite der Hartschichtplatte wies einen intumeszierenden Klebstoffschichtbereich auf und die der Kernschicht abgewandte Seite der mineralischen Kühlmittelschicht aus ENEX sowie zumindest ein Randbereich der nicht mit dem intumeszierenden Klebstoff bedeckten Bereich der Hartschichtplatte war mit einer 2.2 mm dicken intumeszierenden Schicht aus PYRO-SAVE bedeckt. Ein Anschlussprofil war in einem inneren Bereich auf der der Kernschicht abgewandten Seite des intumeszierenden Klebstoffschichtbereiches aufgeklebt.

Die Bodenplatte wurde dann in einen Ofen gegeben und gemäss ISO 834-1 unter Einhaltung der Einheitstemperaturkurve nach DIN EN 1363-1 getestet. Das Testverfahren nach ISO 834-1 entspricht in Teilen der ASTM E 119-Prüfung. Die Temperaturmessung erfolgte auf der Deckschicht mittig der Bodenplatte. Dabei wurde die Deckschicht der Bodenplatte in einem Zeitraum von 35 Minuten gemäss nachfolgender Tabelle 1 von 20°C bis 862°C aufgeheizt, wobei die Struktur der Bodenplatte auch nach 35 Minuten noch intakt war.

**Tabelle 1: Temperatur-Zeitkurve nach DIN EN 1363-1**

| Zeit ab Versuchsstart [min] | Gemessene Oberflächentemperatur auf der Deckschicht [°C] | Zeit ab Versuchsstart [min] | Gemessene Oberflächentemperatur auf der Deckschicht [°C] |
|---|---|---|---|
| 0 | 20 | 18 | 780 |
| 1 | 123 | 19 | 787 |
| 2 | 220 | 20 | 794 |
| 3 | 330 | 21 | 799 |
| 4 | 434 | 22 | 804 |
| 5 | 538 | 23 | 810 |
| 6 | 571 | 24 | 815 |
| 7 | 604 | 25 | 821 |
| 8 | 638 | 26 | 825 |
| 9 | 671 | 27 | 829 |
| 10 | 704 | 28 | 834 |
| 11 | 720 | 29 | 838 |
| 12 | 731 | 30 | 843 |
| 13 | 740 | 31 | 847 |
| 14 | 749 | 32 | 851 |
| 15 | 758 | 33 | 854 |
| 16 | 766 | 34 | 858 |
| 17 | 773 | 35 | 862 |

### Test 2:

Als Vergleichsversuch wurde eine gleiche Bodenplatte mit gleichem Aufbau wie im ersten Versuch, jedoch ohne mineralische Kühlmittelschicht nach den Richtlinien der ISO 834-1 getestet, wobei als intumeszierende Schicht eine 2 mm dicke Schicht aus Sika Unitherm Platinum verwendet wurde. Sika Unitherm Platinum ist eine lösemittelfreie 2K Brandschutzbeschichtung auf Epoxidharzbasis mit 100 % Festkörpervolumen.

Die Bodenplatte wurde wiederum in einen Ofen gegeben und gemäss ISO 834-1 unter Einhaltung der Einheitstemperaturkurve nach DIN EN 1363-1 getestet. Der Versuch musste jedoch nach 18 min abgebrochen werden, da die zulässige Temperatur-Zeitkurve nach DIN EN 1363-1 überschritten wurde und die Bodenplatte brannte.

## Patentansprüche

1. Brandgeschützte Bodenstruktur eines Wagenkastens, wobei die Bodenstruktur eine Sandwichplatte (5) aus einer metallischen Deckschicht (10) und einer metallischen Basisschicht (20) und eine dazwischen liegende Kernschicht (30) sowie metallische Randprofile (40) aufweist, wobei die Randprofile (40) dergestalt ausgebildet sind, dass die Kernschicht (30) vollständig durch die metallischen Deck- und Basisschichten (10, 20) und die Randprofile (40) eingeschlossen ist, und die Bodenstruktur auf der der Kernschicht (30) abgewandten Seite der Basisschicht (20) eine mineralische Kühlmittelschicht (60) aufweist und die der Kernschicht (30) abgewandte Seite der mineralischen Kühlmittelschicht (60) mit einer intumeszierenden Schicht (70) bedeckt ist,
**dadurch gekennzeichnet, dass**
die Kernschicht (30) aus einem Strukturschaum, insbesondere aus PET-Schaum, oder aus Balsaholz, insbesondere aus einer Balsaholz-Hirnholzplatte, besteht, oder PET oder Balsaholz zumindest zu 95 Gew-% enthält.

2. Brandgeschützte Bodenstruktur nach Anspruch 1, **dadurch gekennzeichnet, dass** die metallischen Deck- und Basisschichten (10, 20) sowie die Randprofile (40) der Sandwichplatte (5) aus Aluminium sind.

3. Brandgeschützte Bodenstruktur nach Anspruch 1, **dadurch gekennzeichnet, dass** die mineralische Kühlmittelschicht (60) vollflächig auf die Basisschicht (20) vorzugsweise mit einem Zweikomponenten Polyurethanklebstoff aufgeklebt ist.

4. Brandgeschützte Bodenstruktur nach Anspruch 1 oder 2, **dadurch gekennzeichnet, dass** die Bodenstruktur auf der der Kernschicht (30) abgewandte Seite der Basisschicht (20) angeordnete Anschlussprofile (90) enthält, wobei die Bodenstruktur auf der der Kernschicht (30) abgewandten Seite der Basisschicht (20) in Bereichen zur Befestigung der Anschlussprofile (90) intumeszierende Hartschichtplatten (80) aufweist, wobei ein innerer Bereich auf der der Sandwichplatte abgewandten Seite der Hartschichtplatten (80) jeweils einen intumeszierenden Klebstoffschichtbereich (85) aufweist und die der Kernschicht (30) abgewandte Seite der mineralischen Kühlmittelschicht (60) sowie zumindest ein Randbereich der nicht mit dem intumeszierenden Klebstoff (85) bedeckten Bereiche der Hartschichtplatten (80) mit der intumeszierenden Schicht (70) bedeckt sind, und die Anschlussprofile (90) in einem inneren Bereich auf der der Kernschicht (30) abgewandten Seite der intumeszierenden Klebstoffschichtbereiche (85) aufgeklebt sind.

5. Brandgeschützte Bodenstruktur nach Anspruch 4, **dadurch gekennzeichnet, dass** ausserhalb der Bereiche der Basisschicht (20), welche intumeszierende Hartschichtplatten (80) aufweisen, die mineralische Kühlmittelschicht (60) vollflächig auf die Basisschicht (20) vorzugsweise mit einem Zweikomponenten Polyurethanklebstoff aufgeklebt ist.

6. Brandgeschützte Bodenstruktur nach Anspruch 4 oder 5, **dadurch gekennzeichnet, dass** die intumeszierende Schicht (70) vollflächig auf die mineralische Kühlmittelschicht (60) sowie jeweils über einen Randbereich der intumeszierenden Hartschichtplatten vorzugsweise mit einem Zweikomponenten Polyurethanklebstoff aufgeklebt ist.

7. Brandgeschützte Bodenstruktur nach einem der Ansprüche 1 bis 6, **dadurch gekennzeichnet, dass** die mineralische Kühlmittelschicht (60) aus einer Schicht aus zementgebundenem Calciumsilikat besteht.

8. Brandgeschützte Bodenstruktur nach Anspruch 7, **dadurch gekennzeichnet, dass** die mineralische Kühlmittelschicht (60) 1 mm bis 3 mm dick ist.

9. Brandgeschützte Bodenstruktur nach einem der Ansprüche 1 bis 8, **dadurch gekennzeichnet, dass** die intumeszierende Schicht (70) aus einem intumeszierenden Vlies besteht, wobei das Vlies bevorzugt aus Silikatfasern besteht.

10. Brandgeschützte Bodenstruktur nach Anspruch 9, **dadurch gekennzeichnet, dass** die intumeszierende Schicht (70) 0.7 mm bis 3.0 mm dick ist.

11. Brandgeschützte Bodenstruktur nach einem der Ansprüche 1 bis 10, **dadurch gekennzeichnet, dass** die Bodenstruktur in der Draufsicht eine im Wesentlichen rechteckige Struktur mit einer Breite zweckmässigerweise zwischen 1.5 m und 4 m, bevorzugt zwischen 2 m und 3 m und einer Länge zweckmässigerweise zwischen 6 m und 25 m, bevorzugt zwischen 10 m und 20 m aufweist.

12. Brandgeschützte Bodenstruktur nach einem der Ansprüche 1 bis 11, **dadurch gekennzeichnet, dass** die Bodenstruktur selbsttragend ausgebildet ist, wobei die Sandwichplatte (5) eine Dicke von zweckmässig 30 mm bis 80 mm und bevorzugt 50 mm bis 70 mm aufweist.

13. Brandgeschützte Bodenstruktur nach einem der Ansprüche 1 bis 12, **dadurch gekennzeichnet, dass** die Deck- und Basisschichten (10, 20) des Sandwiches (5) eine Dicke von 1.0 mm bis 2.0 mm aufweisen.

14. Brandgeschützte Bodenstruktur nach einem der Ansprüche 4 bis 13, **dadurch gekennzeichnet, dass** die intumeszierende Hartschichtplatte (80) aus einem auf Graphit basierenden Plattenmaterial besteht.

15. Brandgeschützte Bodenstruktur nach einem der Ansprüche 4 bis 14, **dadurch gekennzeichnet, dass** die freiliegende Oberfläche der intumeszierenden Hartschichtplatte (80) wenigstens ein C-Profil (90) zur Aufnahme von Rohren oder Leitungen aufweist, wobei das wenigstens eine C-Profil (90) mittels einem intumeszierenden Klebstoff an der intumeszierenden Hartschichtplatte (80) angebracht ist.

16. Brandgeschützte Bodenstruktur nach einem der Ansprüche 1 bis 15, **dadurch gekennzeichnet, dass** die Bodenstruktur über die Randprofile der Sandwichplatte (5) mit Wänden des Wagenkastens mittels Befestigungsmittel verbunden ist.

17. Brandgeschützte Bodenstruktur nach einem der Ansprüche 1 bis 16, **dadurch gekennzeichnet, dass** der Wagenkasten ein Wagenkasten für Strassen- oder Schienenfahrzeuge ist.

## Claims

1. Fire-protected floor structure of a wagon body, wherein the floor structure has a sandwich plate (5) made of a metallic top layer (10) and a metallic base layer (20) and a core layer (30) lying therebetween as well as metallic edge profiles (40), wherein the edge profiles (40) are configured in such a way that the core layer (30) is completely enclosed by the metallic top and base layers (10, 20) and the edge profiles (40), and the floor structure has a mineral coolant layer (60) on the side of the base layer (20) facing away from the core layer (30) and the side of the mineral coolant layer (60) facing away from the core layer (30) is covered with an intumescent layer (70),
**characterized in that**
the core layer (30) is made of a structural foam, in particular of PET foam, or of balsa wood, in particular of a balsa wood end grain board, or contains at least 95% by weight of PET or balsa wood.

2. Fire-protected floor structure according to claim 1, **characterized in that** the metallic top and base layers (10, 20) as well as the edge profiles (40) of the sandwich plate (5) are made of aluminum.

3. Fire-protected floor structure according to claim 1, **characterized in that** the mineral coolant layer (60) is bonded over the entire surface of the base layer (20), preferably with a two-component polyurethane adhesive.

4. Fire-protected floor structure according to claim 1 or 2, **characterized in that** the floor structure contains connecting profiles (90) arranged on the side of the base layer (20) facing away from the core layer (30), wherein the floor structure has intumescent hard layer plates (80) on the side of the base layer (20) facing away from the core layer (30) in areas for attaching the connecting profiles (90), wherein an inner area on the side of the hard layer plates (80) facing away from the sandwich plate has an intumescent adhesive layer area (85) in each case and the side of the mineral coolant layer (60) facing away from the core layer (30) as well as at least one edge area of the areas of the hard layer plates (80) not covered with the intumescent adhesive (85) are covered with the intumescent layer (70) and the connecting profiles (90) are bonded in an inner area on the side of the intumescent adhesive layer areas (85) facing away from the core layer (30).

5. Fire-protected floor structure according to claim 4, **characterized in that**, outside the areas of the base layer (20) which have intumescent hard layer plates (80), the mineral coolant layer (60) is bonded over the entire surface of the base layer (20), preferably with a two-component polyurethane adhesive.

6. Fire-protected floor structure according to claim 4 or 5, **characterized in that** the intumescent layer (70) is bonded over the entire surface of the mineral coolant layer (60) as well as in each case over an edge area of the intumescent hard layer plates, preferably with a two-component polyurethane adhesive.

7. Fire-protected floor structure according to any one of the claims 1 to 6, **characterized in that** the mineral coolant layer (60) is made of a layer made of cement-bonded calcium silicate.

8. Fire-protected floor structure according to claim 7, **characterized in that** the mineral coolant layer (60) is 1 mm to 3 mm thick.

9. Fire-protected floor structure according to any one of the claims 1 to 8, **characterized in that** the intumescent layer (70) is made of an intumescent fleece, wherein the fleece is preferably made of silicate fibers.

10. Fire-protected floor structure according to claim 9, **characterized in that** the intumescent layer (70) is 0.7 mm to 3.0 mm thick.

11. Fire-protected floor structure according to any one of the claims 1 to 10, **characterized in that** the floor structure has a substantially rectangular structure in top view with a width expediently between 1.5 m and 4 m, preferably between 2 m and 3 m, and a length expediently between 6 m and 25 m, preferably between 10 m and 20 m.

12. Fire-protected floor structure according to any one of the claims 1 to 11, **characterized in that** the floor structure is configured to be self-supporting, wherein the sandwich plate (5) has a thickness of expediently 30 mm to 80 mm and preferably 50 mm to 70 mm.

13. Fire-protected floor structure according to any one of the claims 1 to 12, **characterized in that** the top and base layers (10, 20) of the sandwich (5) have a thickness of 1.0 mm to 2.0 mm.

14. Fire-protected floor structure according to any one of the claims 4 to 13, **characterized in that** the intumescent hard layer plate (80) is made of a graphite-based plate material.

15. Fire-protected floor structure according to any one of the claims 4 to 14, **characterized in that** the exposed surface of the intumescent hard layer plate (80) has at least one C-profile (90) for receiving pipes or conduits, wherein the at least one C-profile (90) is attached to the intumescent hard layer plate (80) by means of an intumescent adhesive.

16. Fire-protected floor structure according to any one of the claims 1 to 15, **characterized in that** the floor structure is attached to walls of the wagon body via the edge profiles of the sandwich plate (5) by means of fixing means.

17. Fire-protected floor structure according to any one of the claims 1 to 16, **characterized in that** the wagon body is a wagon body for road or rail vehicles.

## Revendications

1. Structure de plancher coupe-feu d'une caisse de voiture, la structure de plancher présentant un panneau sandwich (5) constitué d'une couche de recouvrement métallique (10) et d'une couche de base métallique (20) et d'une couche centrale (30) située entre celles-ci ainsi que des profilés de bord métalliques (40), les profilés de bord (40) étant réalisés de telle sorte que la couche centrale (30) est complètement enfermée par les couches de recouvrement et de base métalliques (10, 20) et les profilés de bord (40), et la structure de plancher présentant, sur le côté de la couche de base (20) opposé à la couche centrale (30), une couche d'agent de refroidissement minérale (60) et le côté de la couche d'agent de refroidissement minérale (60) opposé à la couche centrale (30) étant recouvert d'une couche intumescente (70),
**caractérisée en ce que**
la couche centrale (30) est constituée d'une mousse structurelle, en particulier de mousse de PET, ou de bois de balsa, en particulier d'un panneau de bois de balsa-bois de tête, ou contient du PET ou du bois de balsa à raison d'au moins 95 % en poids.

2. Structure de plancher coupe-feu selon la revendication 1, **caractérisée en ce que** les couches de recouvrement et de base métalliques (10, 20) ainsi que les profilés de bord (40) du panneau sandwich (5) sont en aluminium.

3. Structure de plancher coupe-feu selon la revendication 1, **caractérisée en ce que** la couche d'agent de refroidissement minérale (60) est collée sur toute la surface sur la couche de base (20) de préférence avec un adhésif polyuréthane à deux composants.

4. Structure de plancher coupe-feu selon la revendication 1 ou 2, **caractérisée en ce que** la structure de plancher contient des profilés de raccordement (90) disposés sur le côté de la couche de base (20) opposé à la couche centrale (30), la structure de plancher présentant, sur le côté de la couche de base (20) opposé à la couche centrale (30), dans des zones pour la fixation des profilés de raccordement (90), des panneaux de couche dure intumescents (80), une zone intérieure présentant, sur le côté des panneaux de couche dure (80) opposé au panneau sandwich, à chaque fois une zone de couche adhésive intumescente (85) et le côté de la couche d'agent de refroidissement minérale (60) opposé à la couche centrale (30) ainsi qu'au moins une zone de bord des zones des panneaux de couche dure (80) non recouvertes de l'adhésif intumescent (85) étant recouverts de la couche intumescente (70), et les profilés de raccordement (90) étant collés dans une zone intérieure sur le côté des zones de couche adhésive intumescentes (85) opposé à la couche centrale (30).

5. Structure de plancher coupe-feu selon la revendication 4, **caractérisée en ce qu'**en dehors des zones de la couche de base (20) qui présentent des panneaux de couche dure intumescents (80), la couche d'agent de refroidissement minérale (60) est collée sur toute la surface sur la couche de base (20) de préférence avec un adhésif polyuréthane à deux composants.

6. Structure de plancher coupe-feu selon la revendication 4 ou 5, **caractérisée en ce que** la couche intumescente (70) est collée sur toute la surface sur la couche d'agent de refroidissement minérale (60) ainsi qu'à chaque fois par le biais d'une zone de bord des panneaux de couche dure intumescents de préférence avec un adhésif polyuréthane à deux composants.

7. Structure de plancher coupe-feu selon l'une quelconque des revendications 1 à 6, **caractérisée en ce que** la couche d'agent de refroidissement minérale (60) se compose d'une couche de silicate de calcium lié au ciment.

8. Structure de plancher coupe-feu selon la revendication 7, **caractérisée en ce que** la couche d'agent de refroidissement minérale (60) présente une épaisseur de 1 mm à 3 mm.

9. Structure de plancher coupe-feu selon l'une quelconque des revendications 1 à 8, **caractérisée en ce que** la couche intumescente (70) se compose d'un non-tissé intumescent, le non-tissé se composant de préférence de fibres de silicate.

10. Structure de plancher coupe-feu selon la revendication 9, **caractérisée en ce que** la couche intumescente (70) présente une épaisseur de 0,7 mm à 3,0 mm.

11. Structure de plancher coupe-feu selon l'une quelconque des revendications 1 à 10, **caractérisée en ce que** la structure de plancher présente, en vue de dessus, une structure sensiblement rectangulaire avec une largeur de manière appropriée comprise entre 1,5 m et 4 m, de préférence entre 2 m et 3 m et une longueur de manière appropriée comprise entre 6 m et 25 m, de préférence entre 10 m et 20 m.

12. Structure de plancher coupe-feu selon l'une quelconque des revendications 1 à 11, **caractérisée en ce que** la structure de plancher est réalisée de manière autoportante, le panneau sandwich (5) présentant une épaisseur de manière appropriée de 30 mm à 80 mm et de préférence de 50 mm à 70 mm.

13. Structure de plancher coupe-feu selon l'une quelconque des revendications 1 à 12, **caractérisée en ce que** les couches de recouvrement et de base (10, 20) du sandwich (5) présentent une épaisseur de 1,0 mm à 2,0 mm.

14. Structure de plancher coupe-feu selon l'une quelconque des revendications 4 à 13, **caractérisée en ce que** le panneau de couche dure intumescent (80) se compose d'un matériau de panneau à base de graphite.

15. Structure de plancher coupe-feu selon l'une quelconque des revendications 4 à 14, **caractérisée en ce que** la surface exposée du panneau de couche dure intumescent (80) présente au moins un profilé en C (90) pour la réception de tuyaux ou de conduites, l'au moins un profilé en C (90) étant appliqué au moyen d'un adhésif intumescent sur le panneau de couche dure intumescent (80).

16. Structure de plancher coupe-feu selon l'une quelconque des revendications 1 à 15, **caractérisée en ce que** la structure de plancher est connectée par le biais des profilés de bord du panneau sandwich (5) à des parois de la caisse de voiture au moyen de moyens de fixation.

17. Structure de plancher coupe-feu selon l'une quelconque des revendications 1 à 16, **caractérisée en ce que** la caisse de voiture est une caisse de voiture pour des véhicules routiers ou ferroviaires.
